# EUROPÄISCHE PATENTANMELDUNG

(11) **EP 1 850 001 A2**
(43) Veröffentlichungstag der Anmeldung: **31.10.2007**
(21) Anmeldenummer: 07007740.9
(22) Anmeldetag: 16.04.2007
(51) Int. Cl.: F03D 7/02

(54) **Verfahren zum Betreiben einer Windenergieanlage**

(30) Priorität: 27.04.2006 DE 102006020257
(71) Anmelder: Daubner & Stommel GbR Bau-Werk-Planung, 27777 Ganderkesee (DE)
(72) Erfinder: Stommel, Matthias, 27777 Ganderkesee (DE)
(74) Vertreter: Aulich, Martin

(57) **Zusammenfassung**

Die Erfindung betrifft ein Verfahren zum Betreiben einer Windenergieanlage, wobei die Windenergieanlage (10) eine Mehrzahl von Bauteilen aufweist, mindestens aber einen Rotor (18) mit zumindest einem Rotorblatt (22) sowie einen Generator zur Umwandlung der mechanischen Energie des Rotors (18) in elektrische Energie sowie gegebenenfalls einen Turm (14), an dem der Rotor (18) angeordnet ist. In zumindest ein Bauteil können während der Rotationsbewegung des Rotorblattes (22) über steuerbare Krafteinleitungsmittel, Gegenkräfte eingeleitet werden, die das Bauteil (22) beeinflussenden Kräften, insbesondere Windlasten, entgegenwirken, nämlich diese Kräfte wenigstens temporär mindestens teilweise oder vollständig kompensieren.

## Beschreibung

Die vorliegende Erfindung betrifft ein Verfahren zum Betreiben einer Windenergieanlage, wobei die Windenergieanlage eine Mehrzahl von Bauteilen aufweist, mindestens allerdings einen Rotor mit zumindest einem Rotorblatt sowie einen Generator zur Umwandlung der mechanischen Energie des Rotors in elektrische Energie, wobei ein oder mehrere Kennwerte bestimmt, insbesondere gemessen werden, die unmittelbar oder mittelbar abhängig sind von das Bauteil beeinflussenden Kräften, und/oder von denen umgekehrt diese das Bauteil beeinflussenden Kräfte abhängen, wie etwa die aktuelle Windgeschwindigkeit oder ein Betriebsparameter der Windenergieanlage, etwa der Windanstellwinkel des Rotorblattes. Die vorliegende Erfindung betrifft des Weiteren eine Windenergieanlage zur Durchführung des Verfahrens.

Verschiedene Bauteile einer Windenergieanlage sind unterschiedlichen Krafteinflüssen ausgesetzt. Diese Krafteinflüsse führen wiederum zu unterschiedlichen Problemen. Die Rotorblätter einer Windenergieanlage sind beispielsweise einer hohen Windlast ausgesetzt. Die durch die Windlast bedingten Kräfte bewirken vornehmlich eine Verformung der Rotorblätter. Die Verformung ist dabei üblicherweise an den Flügelspitzen größer als in den näher am Rotorzentrum gelegenen Rotorblattabschnitten.

Die Blattverformung beeinflusst unter anderem die jeweils eingestellten Anstellwinkel der Rotorblätter zum Wind. Insbesondere zu den Blattspitzen hin weicht der tatsächliche Anstellwinkel deshalb häufig von dem vorgegebenen Anstellwinkel ab. Um dem entgegenzuwirken, ist es im Stand der Technik bekannt, die Rotorblätter bereits während der Produktion derselben nach vorne vorzubiegen, d.h. bezogen auf den verbauten Zustand in die windzugewandte Richtung. Diese fest vorgegebene Vorbiegung ist allerdings ein Kompromiss. Denn nur bei einer bestimmten Windgeschwindigkeit sind die Kräfteverhältnisse so, dass die produktionsseitige Vorbiegung die durch den Winddruck bewirkte Verformung exakt kompensiert. Bei davon abweichenden Windgeschwindigkeiten ist die Stellung des Rotorblattes zum Wind daher nicht optimal.

Die die einzelnen Bauteile der Windenergieanlage beeinflussenden Kräfte, wie etwa die Windlast, das jeweilige Eigengewicht der Bauteile oder dergleichen führen nicht nur zu aerodynamischen Problemen. Daneben beeinflussen diese Kräfte, insbesondere Wechsellasten, auch die Lebensdauer der einzelnen Bauteile negativ.

Aus der US 2004/0067134 A1 ist es bekannt, Rotorblätter abhängig von der gemessenen Windgeschwindigkeit um die Längsachse zu verwinden, d.h. die Rotorblätter partiell aus dem Wind zu drehen bzw. zu pitchen. Dazu sind innerhalb der Wandungen des Rotorblattes piezoelektrische Fasern angeordnet, deren Faserlängen über eine Steuereinrichtung steuerbar sind. Auf relativ komplizierte Weise wird im Rahmen der Lösung dieser Schrift im Ergebnis bereits das Entstehen von einigen, das Rotorblatt negativ beeinflussenden Kräften teilweise verhindert, indem das Rotorblatt abhängig von der Stärke des Windes aus dem Wind gedreht wird. Nachteilig bei dieser Lösung ist allerdings, dass naturgemäß das Entstehen einer Vielzahl negativ beeinflussender, an dem Rotorblatt angreifender Kräfte nicht verhindert werden kann. Diese Kräfte, die mittels des partiellen Pitchens nicht bereits im Vorfeld verhindert werden können und die mithin an dem Rotorblatt angreifen, können im Rahmen der Lösung der US 2004/0067134 A1 unbeeinflusst negativ wirken und das Rotorblatt schädigen.

Aufgabe der vorliegenden Erfindung ist es daher, ein Verfahren zum Betreiben einer Windenergieanlage anzugeben, mit dem wenigstens einigen der Kräfte, denen Bauteile der Windenergieanlage während des Betriebes ausgesetzt sind und die an dem Bauteil bereits angreifen, entgegengewirkt werden kann. Aufgabe der vorliegenden Erfindung ist des Weiteren, eine Windenergieanlage zur Durchführung eines derartigen Verfahrens anzugeben.

Die Aufgabe der vorliegenden Erfindung wird gelöst durch ein Verfahren zum Betreiben einer Windenergieanlage, das die Merkmale des Anspruches 1 aufweist sowie durch eine Windenergieanlage mit den Merkmalen des Anspruchs 15.

Danach werden bei Windenergieanlage, die eine Mehrzahl von Bauteilen aufweist, mindestens aber einen Rotor mit zumindest einem Rotorblatt sowie einen Generator zur Umwandlung der mechanischen Energie des Rotors in elektrische Energie und gegebenenfalls einen Turm, an dem der Rotor angeordnet ist, ein oder mehrere Kennwerte bestimmt, insbesondere gemessen, die unmittelbar oder mittelbar abhängig sind von das Bauteil beeinflussenden Kräften und/oder von denen umgekehrt diese das Bauteil beeinflussenden Kräfte abhängen, wie etwa die aktuelle Windgeschwindigkeit oder ein oder mehrere Betriebsparameter der Windenergieanlage, etwa der Windanstellwinkel des Rotorblattes. Abhängig von den bestimmten Kennwerten werden während der Rotationsbewegung des Rotors über steuerbare Krafteinleitungsmittel in zumindest ein Bauteil Gegenkräfte eingeleitet, die den das Bauteil beeinflussenden Kräften entgegenwirken, nämlich diese Kräfte wenigstens zeitweise bzw. temporär mindestens teilweise oder vollständig kompensieren.

Unter steuerbare Krafteinleitungsmittel sind sämtliche technischen Mittel zu verstehen, über die in die Bauteile entsprechende Gegenkräfte eingeleitet werden können, wobei die Krafteinleitung steuerbar sein soll. Im einfachsten Fall der Steuerbarkeit ist die Krafteinleitung ein- und ausschaltbar. Bei der Verwendung komplexer Krafteinleitungsmittel können verschiedenste Parameter der Krafteinleitung eingestellt werden, wie etwa die Stärke der Krafteinleitung, deren Dauer, deren Richtung, und/oder der oder die Zeitpunkte der Krafteinleitung oder dergleichen. Die Krafteinleitung kann dabei insbesondere kontinuierlich während der gesamten Rotationsbewegung des Rotors erfolgen, aber auch in gewissen Zeitabständen oder zu gewissen Zeitpunkten, insbesondere periodisch.

Bevorzugt werden die Kennwerte während des Betriebs der Windenergieanlage, d.h. insbesondere während der Rotationsbewegung des Rotors kontinuierlich oder in gewissen Zeitabständen, insbesondere zu gewissen Zeitpunkten, bestimmt oder gemessen. Abhängig von den bestimmten bzw. gemessenen Werten werden die Parameter der einzuleitenden Gegenkräfte eingestellt. Damit ist es möglich, die Gegenkräfte optimal an die das Bauteil beeinflussenden Kräfte anzupassen.

Was die Bestimmung oder Messung der Kennwerte betrifft, so können in einer Ausführungsform beispielsweise an dem Rotorblatt der Windenenergieanlage die durch Windlast aktuell auftretenden Verformungskräfte mittels geeigneter Sensoren gemessen und abhängig davon die Parameter der Gegenkräfte eingestellt werden. Weiter kann die am Rotor, am Rotorblatt und/oder in der Rotorumgebung auftretende Windgeschwindigkeit gemessen und abhängig von diesen Kennwerten die Parameter der einzuleitenden Gegenkräfte eingestellt werden. Zusätzlich oder alternativ können die aktuellen Betriebsparameter der Windenergieanlage, etwa die aktuellen Windanstellwinkel der Rotorblätter, die Rotationsfrequenz oder Rotationsgeschwindigkeit des Rotors oder dergleichen bestimmt und abhängig von diesen Werten die Parameter der einzuleitenden Gegenkräfte eingestellt werden.

In einer weiteren bevorzugten Ausführungsform der vorliegenden Erfindung werden in das Bauteil, vorzugsweise in das Rotorblatt, Gegenkräfte eingeleitet mittels einer insbesondere an oder in dem Bauteil angeordneten, steuerbaren Spannvorrichtung.

Vorzugsweise bewirken die Gegenkräfte dabei eine Vorspannung des Rotorblattes in die windzugewandte Richtung.

Wie der Fachmann erkennt, können die steuerbaren Krafteinleitungsmittel, insbesondere die Spannvorrichtung, in verschiedenster Form ausgebildet sein. Denkbar ist beispielsweise auch, eine steuerbare Zugvorrichtung mit Seilen, wie etwa Drahtseilen einzusetzen, über die etwa das Rotorblatt oder andere Bauteile steuerbar (vor-)gespannt werden können.

Die Spannvorrichtung kann allgemein ein oder mehrere Zugmittel, insbesondere Zugstränge, Zugseile, Zugketten, Zugriemen oder dergleichen, aufweisen, vorzugsweise Stränge aus elektroaktiven Polymeren, wobei die Zugmittel bevorzugt außerhalb der Wandungen des Bauteils verlaufen, besonders bevorzugt im Inneren des Bauteils.

Wenn das Bauteil als Rotorblatt ausgebildet ist, verlaufen die Zugmittel, insbesondere die Zugstränge, Zugseile, Zugketten, Zugriemen oder dergleichen, vorzugsweise im Inneren des Rotorblattes, allerdings außerhalb der Rotorblattwandungen, wobei sie bezogen auf die Längserstreckung des Rotorblattes mindestens abschnittsweise im an den Blattanschluss angrenzenden, ersten Rotorblattdrittel verlaufen, dann durch zweite Rotorblattdrittel geführt sind, sowie mindestens abschnittsweise in dem letzten, an die Rotorblattspitze angrenzenden Rotorblattdrittel verlaufen. Entscheidend ist, dass die Zugmittel derart ausgebildet werden und so gespannt werden können, dass über die Zugmittel Gegenkräfte auf das Rotorblatt übertragen werden können, die das Rotorblatt negativ beeinflussenden Kräften entgegenwirken.

In dem letzten, an die Rotorblattspitze angrenzenden Rotorblattdrittel sind die Zugmittel zur Krafteinleitung vorzugsweise mit dem Rotorblatt verbunden, etwa im Inneren des Rotorblattes unmittelbar an der Wandung des Rotorblattes befestigt. An ihrem entgegengesetzten Ende können die Zugmittel insbesondere mit der Rotorblattwurzel oder der Rotornabe verbunden sein, etwa an Wandungen der Rotorblattwurzel oder an der Rotornabe befestigt sein. Es ist insbesondere denkbar, die Zugmittel steuerbar im Bereich des ersten Drittels des Rotorblatts, bspw. unmittelbar an der Rotorblattwurzel, oder im Bereich der Rotorblattnabe, auf eine dort angeordnete Rolle oder Trommel motorgetrieben aufzuwickeln bzw. von dieser abzuwickeln, um die Spannung bzw. Entspannung der Zugmittel und damit die steuerbare Krafteinleitung in das Rotorblatt zu bewirken. Hier sind vielfältige Ausführungsformen denkbar.

Die Spannvorrichtung kann elektroaktive Polymerstränge aufweisen, deren Längen sich bei Anlegen einer elektrischen Aktivierungsspannung ändern. Diese Längenänderung kann bei entsprechender Anordnung dieser Stränge in/an dem Bauteil, insbesondere in/an dem Rotorblatt, ausgenutzt werden, um geeignete Verformungen des Bauteils zu bewirken, die windinduzierten Verformungen entgegenwirken oder diese sogar vollständig ausgleichen.

Die Einleitung der Gegenkräfte wird demnach mittels der Verformung bzw. Vorspannung des Bauteils, insbesondere des Rotorblattes, so gesteuert, dass Kräften, denen das Bauteil beispielsweise durch Windlast ausgesetzt ist, wirksam durch eine Bauteilverformung in entgegengesetzte Richtung entgegengewirkt werden kann.

In weiterer Ausbildung der vorliegenden Erfindung kann die Krafteinleitung in das oder jedes Rotorblatt derart periodisch gesteuert werden, dass die Vorspannung, mit der das Rotorblatt außerhalb des Turmdurchgangs beaufschlagt wird, dann reduziert wird, wenn sich das Rotorblatt insbesondere nach unten zeigend im Bereich des Turmdurchganges befindet, d.h. die Turmfläche überstreicht. Außerhalb des Turmbereichs wird die Vorspannung des Rotorblattes anschließend wieder auf den jeweiligen Ausgangswert erhöht. Ohne diese periodische Reduktion der Vorspannung im Turmbereich bestünde das Risiko, dass die Vorspannung aufgrund der im Turmdurchgang geringen Windlast größer ist als notwendig. Das Rotorblatt würde sich eventuell ohne Vorspannungsreduktion während des Turmdurchgangs aus der üblichen Rotationsebene heraus in die windzugewandte Richtung bewegen, was zu einer Belastung des Rotorblattes und zu aerodynamisch ungünstigen Bedingungen führen kann.

Gemäß einem weiteren Aspekt der vorliegenden Erfindung werden die Gegenkräfte in das Bauteil, insbesondere das Rotorblatt, eingeleitet, abhängig von einem oder mehreren in räumlichem, zumindest horizontalem Abstand von dem Rotor auf der windzugewandten Seite der Windenergieanlage gemessenen Parametern, die die Windverhältnisse in dem Messbereich beschreiben, vorzugsweise die Windgeschwindigkeit und/oder die Windrichtung, wobei der horizontale Abstand von dem Rotor, in dem die Windparameter gemessen werden, derart gewählt ist, dass die Gegenkrafteinleitung erfolgen kann, bevor der den Windparametern zugrunde liegende Wind, insbesondere eine Windfront oder eine Windböe, den Rotor erreicht.

Wenigstens ein Windparameter kann dabei in einem vertikalen Bodenabstand gemessen werden, dessen Wert in einem Intervall zwischen dem bodennächsten Punkt und dem bodenentferntesten Punkt der von dem Rotorblatt während einer vollständigen Umdrehung beschriebenen Fläche liegt. Weiter können zumindest zwei Windparameter in dem Werteintervall des vertikalen Bodenabstandes des bodennächsten Punktes und des bodenentferntesten Punktes der von dem Rotorblatt während einer vollständigen Umdrehung beschriebenen Fläche gemessen werden, wobei der vertikale Abstand der Punkte bzw. Bereiche, in dem die Windparameter gemessenen werden, voneinander mindestens 50 cm, vorzugsweise mindestens 2 Meter, besonders bevorzugt mindestens 5 Meter beträgt.

Wenigstens ein Windparameter kann bezogen auf eine Vorderansicht der windzugewandten Seite der Windenergieanlage innerhalb eines gedachten ringförmigen Bereichs um die Rotornabe gemessen werden, mit einem Innenradius des ringförmigen Bereichs, der größer ist als der halbe Abstand zwischen Rotornabe und Rotorblattspitze und mit einem Außenradius, der größer ist als ¾ des Abstandes zwischen Rotornabe und Rotorblattspitze, vorzugsweise gleich groß oder größer als der ganze Abstand zwischen Rotornabe und Rotorblattspitze.

Die Windparameter können allgemein orts- und/oder zeitaufgelöst gemessen werden.

Weiter kann an einer Mehrzahl von räumlich voneinander beabstandeten Messpunkten die an den Messpunkten jeweils gegebenen Windgeschwindigkeiten und/oder Windrichtungen gemessen werden, vorzugsweise zeitaufgelöst.

Bevorzugt wird erfindungsgemäß die Einleitung der Gegenkräfte mittels steuerbar verformbarer Materialien bewirkt. Dies können neben den vorgenannten elektroaktiven Polymeren sämtliche Materialien sein, die steuerbar Dimensionsänderungen vollziehen können.

Es liegt auch im Rahmen der Erfindung, unmittelbar in die Bauteilwandungen selbst, etwa in die Rotorblattschalen, zumindest teilweise Materialien - wie etwa elektroaktive Polymere - zu integrieren, die steuerbar verformbar sind. Wenigstens eine Schicht der Bauteilwandungen kann zumindest teilweise aus diesen Materialien bestehen. Das Bauteil bzw. das Rotorblatt kann mit diesen verformbaren Materialien insbesondere überzogen werden.

Die Bauteil- bzw. Rotorblattverformung wird vorzugsweise mittels einer Steuerung gesteuert, über die geeignete Parameter der Krafteinleitungsmittel, etwa der Spannvorrichtung, eingestellt werden, wie etwa die Aktivierungsspannung der elektroaktiven Polymerstränge.

In einer speziellen Ausführungsform der vorliegenden Erfindung werden in den Blattanschluss eines oder jedes Rotorblatts Gegenkräfte eingeleitet, die eine Vorspannung des Blattabschlusses bewirken, insbesondere in Richtung des Rotorzentrums. Durch das Eigengewicht des jeweiligen Rotorblattes ist der häufig gusseiserne Blattanschluss des Rotorblattes großen Wechsellasten ausgesetzt, die durch die Vorspannung reduziert werden können. Da die Wirkung des Eigengewichts dann am größten ist, wenn sich das Rotorblatt nach unten zeigend im Bereich des Turmdurchganges befindet, d.h. die Turmfläche überstreicht, sollte die Vorspannung wenigstens in derjenigen Zeitspanne erfolgen, in der sich das Rotorblatt in diesem Bereich befindet.

Erfindungsgemäß kann weiter vorgesehen sein, auch in den Turm der Windenergieanlage Gegenkräfte einzuleiten, die beispielsweise Turmschwingungen oder dergleichen entgegenwirken. Dazu ist denkbar, eine steuerbare Spannvorrichtung innerhalb des Turms so anzuordnen, dass den Turmbewegungen durch die Spannvorrichtung entsprechend entgegengewirkt wird. Dies kann wie bei den Rotorblättern durch in geeigneter Weise angeordnete, elektroaktive Polymerstränge erreicht werden. In ähnlicher Weise können in den Gondelanschluss einer mit dem Turm verbundenen Gondel Gegenkräfte durch Vorspannung des Gondelanschlusses mittels Spannvorrichtung eingeleitet werden, die den Gondelanschluss beeinflussenden Kräften entgegenwirken. Grundsätzlich ist denkbar, in verschiedenste Bauteile der Windenergieanlage Gegenkräfte in der oben beschriebenen Weise einzuleiten.

Weitere Merkmale der vorliegenden Erfindung ergeben sich aus den beigefügten Ansprüchen, der nachfolgenden Beschreibung eines bevorzugten Ausführungsbeispiels sowie aus den beigefügten Zeichnungen. Darin zeigen:
- Fig. 1: eine Seitenansicht einer erfindungsgemäßen Windenergieanlage, und
- Fig. 2: einen Längsschnitt durch ein erfindungsgemäßes Rotorblatt mit einem Krafteinleitungsmittel, das einen elektroaktiven Polymerstrang aufweist.

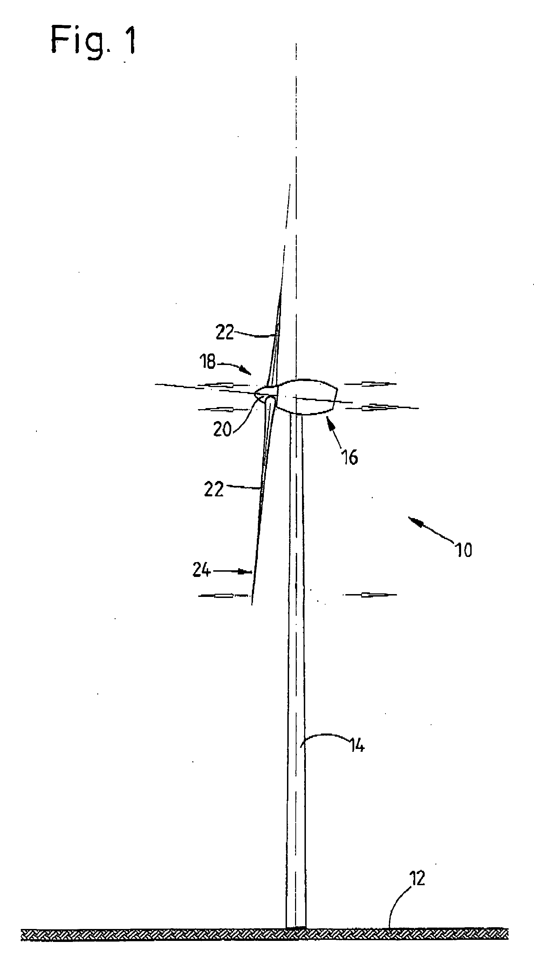

In der Fig. 1 ist eine Windenergieanlage 10 dargestellt, die am oberen Ende eines vertikalen, auf einem horizontalen Untergrund 12 angeordneten Turms 14 eine auf der Turmoberseite angeordnete Gondel 16 aufweist. Wie der Fachmann des Standes der Technik weiß, sind für die genaue Ausbildung eines Turms einer Windenergieanlage vielfältige Ausführungsformen denkbar. Die Erfindung ist naturgemäß nicht auf die in der Zeichnung beschriebene, kegelstumpfförmige Form des Turms 14 beschränkt.

An einem windzugewandten Ende der Gondel 16 ist ein Rotor 18 angeordnet, der eine Nabe 20 aufweist. Mit der Nabe 20 verbunden sind drei Rotorblätter 22, wobei die Rotorblattwurzeln der Rotorblätter 22 in entsprechende Öffnungen der Nabe 20 eingesteckt und in bekannter Weise mit dieser verbunden sind.

Der Rotor 18 dreht sich um eine leicht gegenüber der Horizontalen nach oben geneigte Achse. Sobald Wind auf die Rotorblätter 22 trifft, wird der Rotor 18 mitsamt Rotorblättern 22 um die Rotorachse in Rotation versetzt. Die Bewegung der Rotorachse wird von einem innerhalb der Gondel angeordneten Generator in elektrischen Strom umgewandelt. Die Rotorblätter 22 überstreichen während der Rotation eine Kreisfläche. Über eine nicht dargestellte, allerdings den Fachleuten des Standes der Technik bekannte, Verstelleinrichtung können die Rotorblätter 22 einzeln in ihrer Stellung zum Wind verändert werden, das heißt, der Anstellwinkel der Rotorblätter 22 zum Wind ist einstellbar.

Der grundsätzliche Aufbau der Windenergieanlage 10 mit zumindest annähernd horizontaler Rotorachse ist im Stand der Technik bekannt, so dass auf eine detaillierte Darstellung derselben verzichtet wird.

Durch den Winddruck werden im Betrieb die Rotorblätter 22 während der Rotationsbewegung des Rotors 18 in Richtung der windabgewandten Seite verformt. Diese windinduzierte Verformung wird im Stand der Technik nur teilweise ausgeglichen, indem die jeweilige Rotorblattspitze 24 produktionsseitig bereits leicht in Richtung der windzugewandten Seite vorgebogen ist. Diese produktionsseitige Vorbiegung führt nur bei bestimmten Referenzgeschwindigkeiten zu ausreichenden Ergebnissen. Zumindest bei Geschwindigkeiten, die deutlich von dieser Referenzgeschwindigkeit abweichen, ist dagegen die jeweilige Stellung des Rotorblattes 22 zum Wind auf Grund der windinduzierten Verformung trotz Vorbiegung unzureichend.

Daher werden erfindungsgemäß in jedes Rotorblatt 22 während des Betriebs der Windenergieanlage zu den durch den Winddruck bewirkten Kräften Gegenkräfte eingeleitet, die den aktuell wirkenden, windinduzierten Kräften entgegengerichtet sind und diese wenigstens annähernd kompensieren, zumindest aber reduzieren.

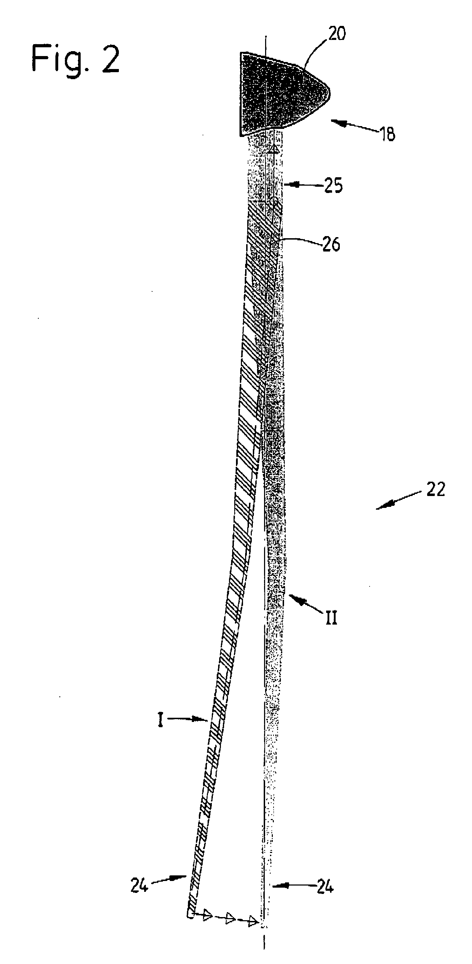

Die Einleitung dieser Gegenkräfte in jedes Rotorblatt 22 erfolgt durch steuerbare Krafteinleitungsmittel. Jedes steuerbare Krafteinleitungsmittel jedes Rotorblattes 22 umfasst jeweils eine steuerbare Spannvorrichtung 25, mit der das Rotorblatt 22 gegen die Windrichtung vorgespannt werden kann, vgl. Fig. 2. Die Spannvorrichtung 25 weist wenigstens einen Strang aus elektroaktiven Polymeren 26 oder aus Materialien auf, in denen elektroaktive Polymere zumindest teilweise integriert sind.

Jeder elektroaktive Polymerstrang 26 ist im Bereich der Rotorblattspitze 24, d.h. im in Längsrichtung von der Blattwurzel aus betrachtet letzten Drittel des Rotorblattes an dem jeweiligen Rotorblatt 22 befestigt. Der Strang 26 wird innerhalb des Rotorblattes 22 von diesem letzten Rotorblattdrittel über das zweite Rotorblattdrittel bis zu dem ersten, an die Rotorblattwurzel angrenzenden Rotorblattdrittel geführt. Das andere Ende des Polymerstrangs 26 ist schließlich am der Rotorblattspitze 24 gegenüberliegenden Ende des Rotorblattes 22 an einer geeigneten Position befestigt, insbesondere an der Rotornabe 22. Durch Aktivierung des elektroaktiven Polymerstranges 26 kann jedes Rotorblatt 22 von einer ersten Stellung I ohne Vorspannung in eine zweite, vorgespannte Stellung II überführt werden. In der zweiten Stellung II ist das jeweilige Rotorblatt 22 in die windzugewandte Richtung vorgespannt.

Die Aktivierung des elektroaktiven Polymerstranges 26 erfolgt durch Anlegen einer geeigneten elektrischen Spannung und bewirkt, das der Strang 26 längenreduziert wird. Die Längenreduktion des Polymerstrangs würde ohne zu kompensierende Gegenkräfte zu einem dem Verschwenken des Rotorblattes 22 aus der Position I in die Position II führen.

Über eine nicht dargestellte Steuereinrichtung kann der elektroaktive Polymerstrang 26 und damit die Vorspannung jedes Rotorblatts 22 durch Einstellung geeigneter Parameter gesteuert werden. Etwa durch Einstellen des Betrags der angelegten elektrischen Spannung kann die Stärke der Längenreduktion des elektroaktiven Polymerstrangs 26 und damit die Größe der Vorspannung eingestellt werden, die der windinduzierten Verformung des Rotorblattes 22 entgegenwirkt. Letztlich werden auf diese Art die Beträge und die Richtungen der Kraftkomponenten eingestellt, die in die windzugewandte Richtung zeigen und damit den windinduzierten Kräften entgegenwirken.

Durch geeignete Sensoren wird jeweils die aktuelle Windgeschwindigkeit gemessen. Abhängig von diesem Kennwert, wird dann die oben dargestellte Gegenkrafteinleitung gesteuert. Bei hohen Windgeschwindigkeiten und damit großer Windlast wird jedes Rotorblatt 22 entsprechend stark in die windzugewandte Richtung vorgespannt. Bei geringeren Windgeschwindigkeiten werden die Rotorblätter 22 weniger stark vorgespannt.

Die Gegenkrafteinleitung und somit die Vorspannung jedes Rotorblatts 22 kann so gesteuert wird, dass zu jeder Windlast bzw. Windgeschwindigkeit eine darauf abgestimmte, optimale Vorspannung gegeben ist.

### Bezugszeichenliste:

- 10: Windenergieanlage
- 12: Untergrund
- 14: Turm
- 16: Gondel
- 18: Rotor
- 20: Nabe
- 22: Rotorblatt
- 24: Rotorblattspitze
- 25: Spannvorrichtung
- 26: elektroaktiver Polymerstrang

## Patentansprüche

**1.** Verfahren zum Betreiben einer Windenergieanlage, wobei die Windenergieanlage (10) eine Mehrzahl von Bauteilen aufweist, mindestens aber einen Rotor (18) mit zumindest einem Rotorblatt (22), sowie einen Generator zur Umwandlung der mechanischen Energie des Rotors (18) in elektrische Energie, wobei ein oder mehrere Kennwerte bestimmt, insbesondere gemessen werden, die unmittelbar oder mittelbar abhängig sind von das Bauteil (22) beeinflussenden Kräften, und/oder von denen umgekehrt diese das Bauteil beeinflussenden Kräfte abhängen, wie etwa die aktuelle Windgeschwindigkeit oder ein Betriebsparameter der Windenergieanlage, etwa der Windanstellwinkel des Rotorblattes, **dadurch gekennzeichnet, dass** während der Rotationsbewegung des Rotors (18) abhängig von dem bestimmten Kennwert oder den bestimmten Kennwerten den das Bauteil beeinflussenden Kräften entgegenwirkende, nämlich diese wenigstens temporär mindestens teilweise oder vollständig kompensierende Gegenkräfte in das Bauteil (22) eingeleitet werden.

**2.** Verfahren gemäß Anspruch 1, **dadurch gekennzeichnet, dass** die die das Bauteil (22) beeinflussenden Kräfte teilweise oder vollständig kompensierenden Gegenkräfte mittels einer steuerbaren Spannvorrichtung eingeleitet werden.

**3.** Verfahren gemäß Anspruch 1 oder 2, **dadurch gekennzeichnet, dass** abhängig von den während der Rotationsbewegung des Rotors (18) bestimmten bzw. gemessenen Kennwerten Parameter der einzuleitenden Gegenkräfte, vorzugsweise die Stärke, Dauer, Richtung und/oder der oder die Zeitpunkte der Krafteinleitung, eingestellt werden.

**4.** Verfahren gemäß einem oder mehreren der vorhergehenden Ansprüche, **dadurch gekennzeichnet, dass** während der Rotationsbewegung des Rotors (18) wenigstens in ein Bauteil (22), bevorzugt in ein oder jedes Rotorblatt (22), Gegenkräfte eingeleitet werden, die aus windlastbedingten Kräften resultierenden Bewegungen oder Verformungen des Bauteils (22) entgegenwirken.

**5.** Verfahren gemäß einem oder mehreren der vorhergehenden Ansprüche, **dadurch gekennzeichnet, dass** die windlastbedingten Kräfte unmittelbar in oder an dem Bauteil, vorzugsweise in oder an dem Rotorblatt (22) gemessen werden, und dass die Parameter der Gegenkräfte abhängig von den gemessenen Werten eingestellt werden.

**6.** Verfahren gemäß einem oder mehreren der vorhergehenden Ansprüche, **dadurch gekennzeichnet, dass** Gegenkräfte in das Bauteil (22), vorzugsweise das Rotorblatt (22) eingeleitet werden, die eine Vorspannung des Bauteils (22) bewirken, besonders bevorzugt eines oder jedes Rotorblatts (22), insbesondere in die windzugewandte Richtung.

**7.** Verfahren gemäß einem oder mehreren der vorhergehenden Ansprüche, **dadurch gekennzeichnet, dass** in den Blattanschluss eines oder jedes Rotorblatts (22) Gegenkräfte eingeleitet werden, die eine Vorspannung des Blattanschlusses bewirken, insbesondere in Richtung des Rotorzentrums.

**8.** Verfahren gemäß einem oder mehreren der vorhergehenden Ansprüche, **dadurch gekennzeichnet, dass** die Gegenkräfte zumindest in derjenigen Zeitspanne eine Vorspannung des Blattanschlusses bewirken, in der sich das Rotorblatt (22) im Verlauf der Rotationsbewegung im Bereich des Turmdurchgangs befindet.

**9.** Verfahren gemäß einem oder mehreren der vorhergehenden Ansprüche, **dadurch gekennzeichnet, dass** Gegenkräfte in den Turm (14) eingeleitet werden, die Turmschwingungen entgegenwirken.

**10.** Verfahren gemäß einem oder mehreren der vorhergehenden Ansprüche, **dadurch gekennzeichnet, dass** Gegenkräfte in den Gondelanschluss eingeleitet werden, die Schwingungen einer mit dem Turm (14) verbundenen Gondel (16) entgegenwirken.

**11.** Verfahren gemäß einem oder mehreren der vorhergehenden Ansprüche, **dadurch gekennzeichnet, dass** die Einleitung der Gegenkräfte in das oder jedes Rotorblatt (22) derart periodisch gesteuert wird, dass die Vorspannung, mit der das Rotorblatt (22) außerhalb dessen Turmdurchgangs beaufschlagt wird, reduziert wird, wenn sich das Rotorblatt im Verlauf der Rotationsbewegung, insbesondere nach unten zeigend, im Bereich des Turmdurchganges befindet.

**12.** Verfahren gemäß einem oder mehreren der vorhergehenden Ansprüche, **dadurch gekennzeichnet, dass** die Gegenkräfte in das Bauteil, insbesondere das Rotorblatt (22), eingeleitet werden abhängig von einem oder mehreren in räumlichem, zumindest horizontalem Abstand von dem Rotor (16) auf der windzugewandten Seite der Windenergieanlage (10) gemessenen Parametern, die die Windverhältnisse in dem Messbereich beschreiben, vorzugsweise die Windgeschwindigkeit und/oder die Windrichtung, wobei der horizontale Abstand von dem Rotor, in dem die Windparameter gemessen werden, derart gewählt ist, dass die Gegenkrafteinleitung erfolgen kann, bevor der den Windparametern zugrunde liegende Wind, insbesondere eine Windfront oder eine Windböe, den Rotor (16) erreicht.

**13.** Verfahren gemäß Anspruch 12, **dadurch gekennzeichnet, dass** die Windparameter in einem Bereich gemessen werden, der bezogen auf eine zu erwartende Hauptwindströmung auf der windzugewandten Seite der Windenergieanlage (10) angeordnet ist.

**14.** Verfahren gemäß einem oder mehreren der vorhergehenden Ansprüche 12 - 13, **dadurch gekennzeichnet, dass** wenigstens ein Windparameter in einem horizontalen Abstand von mindestens 1 Meter, vorzugsweise von mindestens 10 Metern, besonderes bevorzugt von mindestens 20 Metern von dem Rotor (16) gemessen wird.

**15.** Windenergieanlage, insbesondere zur Durchführung des Verfahrens gemäß einem oder mehreren der Ansprüche 1 - 14, die eine Mehrzahl von Bauteilen aufweist, mindestens einen Rotor (18) mit zumindest einem Rotorblatt (22) sowie einen Generator zur Umwandlung der mechanischen Energie des Rotors (18) in elektrische Energie, **gekennzeichnet durch** steuerbare Krafteinleitungsmittel, über die während der Rotationsbewegung des Rotorblattes (22) in zumindest ein Bauteil (22) Gegenkräfte einleitbar sind, die das Bauteil (22) beeinflussenden Kräften, insbesondere Windlasten, entgegenwirken, nämlich diese Kräfte wenigstens temporär mindestens teilweise oder vollständig kompensieren.

**16.** Windenergieanlage gemäß Anspruch 15, **dadurch gekennzeichnet, dass** die steuerbaren Krafteinleitungsmittel eine steuerbare Spannvorrichtung (25) umfassen, über die das Bauteil (22), insbesondere das Rotorblatt (22), mit einer (mechanischen) Vorspannung beaufschlagbar ist.

**17.** Windenergieanlage gemäß Anspruch 15 oder 16, **dadurch gekennzeichnet, dass** die Spannvorrichtung (25) einen oder mehrere Zugmittel, insbesondere Zugstränge, Zugseile, Zugketten, Zugriemen oder dergleichen aufweist, vorzugsweise Stränge aus elektroaktiven Polymeren (26), wobei die Zugstränge, Zugseile, Zugketten oder dergleichen bevorzugt außerhalb der Wandungen des Bauteils (22) verlaufen, besonders bevorzugt im Inneren des Bauteils (22).

**18.** Windenergieanlage gemäß Anspruch 17, **dadurch gekennzeichnet, dass** die Zugmittel, insbesondere die Zugstränge, Zugseile, Zugketten, Zugriemen oder dergleichen im Inneren des Rotorblattes, allerdings außerhalb der Rotorblattwandungen verlaufen, wobei sie bezogen auf die Längserstreckung des Rotorblattes mindestens abschnittsweise im an den Blattanschluss angrenzenden, ersten Rotorblattdrittel verlaufen, durch das zweite Rotorblattdrittel geführt sind, sowie mindestens abschnittsweise in dem letzten, an die Rotorblattspitze angrenzenden Rotorblattdrittel verlaufen.

**19.** Windenergieanlage gemäß Anspruch 17 oder 18, **dadurch gekennzeichnet, dass** die Zugstränge, Zugseile, Zugketten oder dergleichen bezogen auf die Längserstreckung des Rotorblattes zur Krafteinleitung in dem letzten, an die Rotorblattspitze angrenzenden Rotorblattdrittel mit dem Rotorblatt verbunden sind.

**20.** Windenergieanlage gemäß einem oder mehreren der Ansprüche 15 - 19, **dadurch gekennzeichnet, dass** die elektroaktiven Polymere, insbesondere der oder die elektroaktiven Polymerstränge, derart ausgebildet sind, dass das Rotorblatt (22) durch deren Aktivierung mit einer Vorspannung in die windzugewandte Richtung beaufschlagbar ist.

**21.** Windenergieanlage gemäß einem oder mehreren der Ansprüche 15 - 20, **gekennzeichnet durch** eine Steuerungs- und/oder Regelungseinrichtung, über die die Krafteinleitungsmittel, insbesondere die steuerbar verformbaren Materialien (26), steuerbar und/oder regelbar sind.

**22.** Windenergieanlage gemäß einem oder mehreren der Ansprüche 15 - 21, **gekennzeichnet durch** Sensoren, über die das Bauteil (22) beeinflussende Kräfte messbar sind.
